(19) **Europäisches Patentamt / European Patent Office / Office européen des brevets**

(11) **EP 4 260 138 B1**

(12) # EUROPEAN PATENT SPECIFICATION

(45) Date of publication and mention
of the grant of the patent:
**30.07.2025   Bulletin 2025/31**

(21) Application number: **20825257.7**

(22) Date of filing: **11.12.2020**

(51) International Patent Classification (IPC):
**G02F 1/153** *(2006.01)*      **G02F 1/15** *(2019.01)*
**G02F 1/157** *(2006.01)*      **G09F 9/302** *(2006.01)*
**G02F 1/1516** *(2019.01)*

(52) Cooperative Patent Classification (CPC):
**G06F 1/1652; G02F 1/15; G02F 1/15165;
G02F 1/157; G09F 9/3023; G09F 9/372**

(86) International application number:
**PCT/IB2020/061826**

(87) International publication number:
**WO 2021/038547 (04.03.2021 Gazette 2021/09)**

(54) **COLOUR ELECTROCHROMIC DISPLAY**

ELEKTROCHROME FARBANZEIGE

AFFICHEUR ÉLECTROCHROME VERTICAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.10.2023   Bulletin 2023/42**

(73) Proprietor: **RISE Research Institutes of Sweden
AB
501 15 Borås (SE)**

(72) Inventors:
• **ÅHLIN, Jessica
617 92 Norsholm (SE)**

• **ANDERSSON ERSMAN, Peter
501 15 Borås (SE)**
• **FREITAG, Kathrin
501 15 Borås (SE)**
• **NILSSON, Marie
501 15 Borås (SE)**

(74) Representative: **Brann AB
P.O. Box 3690
Sveavägen 63
103 59 Stockholm (SE)**

(56) References cited:
**WO-A1-2013/068185      US-A1- 2017 139 222**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 4 260 138 B1

## Description

<u>Field of the invention</u>

The present invention relates to an electrochromic fixed image display comprising a colour layer which is configured to provide a resulting colour contrast to the display when operating the device. The present invention further relates to the production of such electrochromic fixed image displays and their use.

<u>Background Art</u>

Printed electronics is a set of printing methods used to create electrical devices on various substrates. WO 2013/068185 describes a directly addressed or directly addressable display device comprising an electrolyte in ionic contact with, and sandwiched between, an electrochromic layer (EC-layer) and a counter electrode, wherein the display is arranged to change colour upon reduction of said electrochromic layer.

There are numerous different types of fixed image displays known in the art. One problem related to such displays is to design them in such a way that the message of the fixed image display is "hidden" in its off-state. Another problem that may be noted in the prior art is that the colour of the electrolyte layer and the colour of a symbol defining layer or masking layer should ideally be substantially the same, when the display is in its off-state, as it improves the visual appearance of the display.

Solutions to this problem is presented in WO 2013/068185, and i.a. based on the principle that a symbol defining layer that marks the display segment area and the electrolyte used in the switching of the device, matches each other in colour in the off-state, so that the message of the fixed image display is "hidden" in its off-state. However, this matching of colours may be both difficult and time-consuming and sometimes the coloured pigments may have a negative effect on the displays in different environments.

Therefore, there is still a need for improving the visual appearance and properties of electrochromic displays (EC-displays) and/or optimizing their fabrication techniques.

<u>Summary of the invention</u>

An object of the present invention is to overcome or alleviate the above-mentioned drawbacks. These and other objects are met by the subject matters provided in the independent claims. Preferred embodiments of the invention are presented in the dependent claims.

According to a first aspect thereof, the present invention provides an electrochromic fixed image display, comprising at least one switchable segment which is repeatedly switchable between an on-state and an off-state, wherein each of said at least one switchable segment is configured to display at least one predetermined symbol in said on-state, further each switchable segment comprises a stack of layers, said stack of layers comprising:

- a colour layer which is configured to provide a resulting colour contrast to said at least one switchable segment when comparing said on-state and off-state of the same at least one switchable segment;
- a first electrode layer comprising an electrically conducting electrochromic and electrochemically active organic polymer material which is electrochemically switchable between two different visually detectable colouring states respectively corresponding to said on-state and said off-state of said switchable segment, said first electrode layer being arranged behind said colour layer in the viewing direction of said display;
- a symbol defining layer which is electronically and ionically insulating and comprises at least one opening, wherein said at least one opening defines the shape of said at least one predetermined symbol, said symbol defining layer being arranged behind said first electrode layer in the viewing direction of said display;
- an electrolyte layer being arranged behind said first symbol defining layer in the viewing direction of said display, wherein said electrolyte layer fills and covers the at least one opening of said symbol defining layer; and
- a counter electrode layer comprising an electronically conductive material being arranged behind said electrolyte layer in the viewing direction of said display, wherein said electrolyte layer is in ionic contact with the first electrode layer and the counter electrode layer.

The above described display is advantageous as it provides a "hidden message effect" without the need for laborious and extensive work with colour matching of the symbol defining layer and the electrolyte. The term "hidden message effect" means that it is not as apparent in the off-state of the display, which message is expected to be visible when the display is in its on-state. Thus, a white standard symbol defining layer and electrolyte, respectively, may be used when manufacturing the display. A further advantage with the present invention is that more than one colour may be used across the display and different portions across the same opening in the symbol defining layer may have different colours, so that different portions of e.g. a letter may be perceived as having different colours.

The colour layer may be applied, e.g. by printing techniques, between a substrate and a first electrode layer. According to one example, the colour layer is self-contained. A self-contained colour layer may be used as a substrate whereon the first electrode is printed. In other word, a self-contained colour layer may serve a dual purpose as both substrate and colour layer. Alternatively, a self-contained colour layer is applied to the substrate e.g. via lamination and/or adhesion.

The substrate may continuously cover the colour layer and/or the active area of electrochromic layer. The substrate advantageously protects the fixed image display device and improves its lifetime. The provision of a substrate may further facilitate efficient low-cost manufacturing wherein the substrate may be used as a carrier onto which the colour layer and/or the electrochromic layer is printed. The substrate may have the characteristics that are suitable for conventional printing techniques. The surface of the substrate should be suitable for the selected dye or pigment particles. Further, the substrate may be transparent and/or flexible. In one embodiment the substrate is a transparent plastic substrate.

In another embodiment the colour layer may be added to a surface layer of a completed or partly completed display in front of the first electrode in the viewing direction of the display, by means of e.g. printing. The term partly completed display refers to a display that will switch colour in response to an applied voltage difference, but which is intended to be further assembled e.g. by being provided with a circuitry, battery, casing and/or protective layer.

The term "electrochromic display" is in relation to this invention a display comprising at least one first electrode layer, which is arranged such that a colour change of the first electrode layer is visually detectable in reflection and/or in transmission.

The term "fixed display" means that the display is not arranged to varying images on the same portion/area of the display. Instead, the fixed image display device is arranged to, upon activation to an on-state, display one single fixed image. This single fixed image may alternately be turned on and off, e.g. by means of a control electronics.

The term "on state" of the device is when the power is turned on and a subset of the switchable segments of the display has a colour which is substantially different from the background colour of the display. This colour is referred to as the motif colour of the display. The colour change of the switchable segments is initiated and progressed by a voltage difference being applied across the electrolyte layer.

Further, the term "off state" means when the power to the display is turned off, and all switchable segments have substantially the same colour and appearance, i.e. a voltage applied across the display, if any, is not sufficiently high to cause a change in colour of the pixels of the display. Further, this colour of the switchable segments is referred to as the background colour of the display.

The term "switchable segment" or "pixel" is used interchangeably throughout the present application and means at least a portion of the electrochromic first electrode layer.

The term a "first electrode layer" in relation to this invention is composed of one material or a combination of materials. The material(s) may be organic or inorganic, low molecular or polymeric. Such as a first electrode layer, independent of whether it is composed of one material or is an ensemble of more than one material, combines the following properties:

at least one material is electrically conducting in at least one oxidation state, and at least one material is electrochromic, i.e. exhibits colour change as a result of electrochemical redox reactions within the material, such as e.g. a reduction reaction in the first electrode layer.

In relation to this invention an "electric conductor" is a structure which can conduct electrons and/or ions. An electric conductor may be equal to an electrode or electronic conductor; or be a pure ionic conductor. An electric conductor may also comprise two sequentially arranged portions, wherein one of the portions is arranged to solely or mainly conduct ions, and the other portion is arranged to solely or mainly conduct electrons. An electric conductor may also comprise several alternating ionically and electronically conductive portions. In other words, an electric conductor in direct contact with a voltage supply in one end, and one of the counter electrodes in the other end may be used to apply a potential to the counter electrode.

In relation to this invention "electronic conductor" bears the same meaning as electrode.

In relation to this invention, an "electrolyte" or "electrolyte layer" has the property to provide ions and ion mobility sufficient for the composition to function as an electrolyte in an electrochemical cell. Further, the electrolyte may be a polyelectrolyte which has the property to provide ions and ion mobility sufficient for the composition to function as an electrolyte in an electrochemical cell.

The polyelectrolyte can e.g. be selected amongst polycationic materials, like cationic polymers, preferably polymers having quaternized ammonium groups. Examples of polyelectrolytes being cationic polymers are poly[(3-methyl-1-vinylimidazolium chloride)-co-(1-vinylpyrrolidone)] and poly(diallyldimethylammonium chloride).

Further, the poly[(3-methyl-1-vinylimidazolium chloride)-co-(1-vinylpyrrolidone)] is available as 'Luviquat Excellence™' which is a solution comprising 40 wt% of poly[(3-methyl-1-vinylimidazolium chloride)-co-(1-vinylpyrrolidone)] in water. The poly[(3-methyl-1-vinylimidazolium chloride)-co-(1-vinylpyrrolidone)] is a copolymer having 95 mole % 3-methyl-1-imidazolium chloride repeating units and 5 mole % vinylpyrrolidone units. The product is available from BASF GmbH.

The poly(diallyldimethylammonium chloride) is typically used as a water solution comprising 35 wt. % poly(diallyldimethylammonium chloride). The polycationic polyelectrolyte is available from Sigma Aldrich.

The electrolyte composition of the invention may also comprise further components, like for example surface active agents, lubricants, process stabilizers.

In relation to this invention the choice of electrolyte can be made within a wide range of electrolytes, where polycationic electrolytes is only one example of a suitable electrolyte. A polyanionic electrolyte, such as PSS poly(styrenesulfonate) may also be used. Some polyanionic electrolytes may cause lateral migration, and thereby less sharp images, which could be hidden by one or more printed colour layers hiding such effects.

In all embodiments of the invention, the colouring of each switchable segment is provided by a change in redox state of said electrochromic and electrochemically active organic polymer material, which causes a change of colour of the electrochromic material. In other words, the electrolyte is normally free of colourants such as pH dyes, i.e. dyes which changes colour in response to the surrounding pH. In yet other words, the colour of the electrolyte normally remains unchanged or substantially unchanged during a colour switching of the switchable segment. In yet other words, the colour of the electrolyte is non-switchable, i.e. the colour of the electrolyte remains the same or remains substantially the same when a voltage is applied across the display sufficiently long for at least causing a colour switch, or colour change, of said first electrode layer. In addition to what has been stated with respect to the electrolyte being free of colourants, which changes colour when a potential difference is applied between said first electrode layer and a counter electrode layer, the electrolyte may comprise colourants or opacifiers for reducing the transparency of the electrolyte. The opacifiers normally do not change colour when a voltage difference is applied between the first electrode layer and the counter electrode layer. i.e. the colour of the opacifiers normally remains the same or substantially the same.

The term "colour change" is also meant to include changes in optical density or reflectance, so that "colour change" for example takes into account changes from blue to red, blue to colourless, colourless to blue, dark green to light green, light blue to blue, grey to white or dark grey to light grey alike.

With "visually detectable" means that the electrochromic material provides two different colouring states, e.g. a colour change, when comparing an on-state and off-state of the same switchable segment. Further, when providing a colour layer to the display the colour contrast should be sufficient for the switchable segment to be visually detectable in an on-state of the display.

According to one embodiment, said colour layer comprises colourants and/or opacifiers. Said colourants and/or opacifiers may be selected from dyes and pigment particles.

With "opacifiers" means solid particles, such as pigments, that may be provided to a layer to introduce opacity. Examples of opacifiers may be titanium dioxide ($TiO_2$) or zink oxide (ZnO), zirconium oxide, cadmium sulfide, cadmium selenide, sodium aluminosilicate, chromium (III) oxide, carbon black. This gives the possibility to hide parts of the electrode, which may be an advantage in some applications of electrochromic displays, for example when electrode materials can be printed thereon.

The term "dye" or "ink" means a coloured substance that chemically bonds to the substrate to which it is being applied. This distinguishes dyes from pigments which do not chemically bind to the material or layer they provide colour to. The dye is generally applied in an aqueous solution and may require a mordant or fixative to improve the fastness or fixating properties of the dye to the substrate.

According to one embodiment, said resulting colour contrast ($\Delta E$) may be at least 9. In other embodiments the resulting colour contrast ($\Delta E$) may be at least 10, or at least 15, or at least 20, or at least 25, or at least 30.

According to one embodiment of the present invention, the thickness of said colour layer is at least 5 $\mu$m, or at least 10 $\mu$m, or at least 15 $\mu$m. Additionally or alternatively the thickness of said colour layer is at most 25 $\mu$m, or at most 35 $\mu$m, or at most 50 $\mu$m. For example the thickness may be in the range from 10 $\mu$m to 40 $\mu$m, or in the range from 10 $\mu$m to 20 $\mu$m, or in the range from 11 $\mu$m to 17 $\mu$m.

The colour layer of the present invention may have matching chemical properties with the first electrode layer. In one embodiment the colour layer is hydrophilic.

The term "predetermined symbol" is given by that a layer, the symbol defining layer, is provided with openings that gives the shape of and is matching the symbol of the switchable segment.

The term "symbol defining layer" or "masking layer" is an electrically insulating layer, which has a low permeability for water and ionic species. The symbol defining layer is formed by printing a suitable composition forming the layer after curing. The printable composition may be curable by irradiation or by solvent evaporation, it may be transparent or opaque and it may be colourless or coloured.

Examples of materials used for the symbol defining layer with substantially electrically and ionically insulating properties are solvent based printing inks or varnishes, e.g. Plastijet XG 383, a varnish, or Plastijet XG025, a white opaque printing ink, both sold by Fujifilm Sericol Ltd. In addition, a range of lacquers, varnishes and resins can be used in the invention. Such resins or lacquers can be based on shellac, alkyd resins, polyvinylacetate, polyvinylbutyral, polyvinylchloride, polystyrene, polyesters and low molecular polyolefins. Further examples are UV curable dielectric 5018A purchased from DuPont, Uviplast UV curing ink Omniplus UL-025 from Fujifilm Sericol, Ultragraph UVAR from Marabu Printing Inks. The list is non exhaustive as there many other suitable materials available.

The phrasing "substantially electrically and ionically isolative" should be understood to have the meaning where a material is substantially electrically and ionically isolative is indicating that the material is close to fully, or fully, electrically and ionically insulating. Thus, the wording isolative and insulating are used interchangeably throughout the application. For a material being substantially electrically and ionically isolative, or electrically and ionically insulating, no, or very few, electrons or ions are permitted to pass through the material. Examples of materials for the symbol defining layer providing a substantially electrically and ionically isolation/insulation are given in the section just preceding this one, the list is non exhaustive.

Irradiation curable printing compositions for the symbol defining layer can be chosen among commercial printing inks and printable varnishes such as Electrodag PD-011 B™ from Henkel GmbH, UVIJET Omniplus UL-025 from Fujifilm Sericol Ltd., DuPont 5018A, a clear varnish from DuPont, Ultragraph UVAR från Marabu. Additionally, monomers and other compounds may be added to modify the surface tension of the commercial inks to give a symbol defining layer with good coverage and with few pin-holes.

In more detail, the insulating material is provided i.a. in the intermediate regions between the electrolyte segments and the electrochromic first electrode layer in order to prevent short-circuits, while openings in the insulating material allow for an ionic contact between the electrolyte segments and the electrochromic first electrode layer, hence, the shape of the openings define the image of the display device. The insulating material is preferably processable from solution, such that printing or coating techniques can be used for the deposition of the symbol defining layer, e.g. screen printing, inkjet printing, aerosol-jet printing, flexo printing, gravure printing, offset printing, bar-coating. Solidification, or curing, of the insulating layer after the deposition is preferably performed by a cross-linking reaction initiated by exposure to ultra-violet light or by thermal means. From an aesthetic point of view, in order to improve the colour contrast, the insulating material provided as the background in the viewing direction of the display is preferably perceived having the same colour as the superimposed colour of the electrochromic first electrode layer and the electrolyte layer.

Direct physical contact (common interface) between two phases (for example between electrochemically active organic material and electrolyte) that allows for the exchange of charges through the interface. Charge exchange through the interface can comprise transfer of electrons between electrically conducting phases, transfer of ions between ionically conducting phases, or conversion between electronic current and ionic current by means of electrochemistry at an interface between for example counter element and electrolyte or electrolyte and electrochromic element, or by occurrence of capacitive currents due to the charging of the Helmholtz layer at such an interface.

Ionic contact between two elements is provided by at least one material capable of transporting ions between the two elements. An electrolyte, in direct contact (common interface) with a first and a second electrochemically active layer, is one example of a material which may provide ionic contact between the two electrochemically active layers. The electrolyte may hence be referred to as being in ionic contact with the two electrochemically active layers.

Two materials may be in electronic contact with each other, e.g. via a third material. Electronic contact between two elements is provided by at least one material capable of transporting electrons between the two elements. A layer of carbon, in direct contact (common interface) with a first and a second electrochemically active layer, is one example of a material which may provide electronic contact between the two layers. The layer of carbon may hence be referred to as an electronic conductor, or electronically conductive.

According to one embodiment of the present invention, said electrolyte layer is transparent or comprises colourants and/or opacifiers.

Further, suitable electrolytes for application as electrolyte layers are preferably being printable and they may also be over-printable. These properties are in addition to their basic function of having the ability to function as an electrolyte layer in the electrochromic image display.

It is desirable that the display may be printed on a flexible substrate, for example a porous or fibrous substrate, such as paper, or a transparent plastic substrate, and that it may function in a range of environmental conditions without the need for encapsulation.

The displays according to the present invention, that may be printable on fibrous and porous substrates, faces challenges in the mobility of the electrolyte, because a minimum mobility is essential for the function of the electrolyte.

In one embodiment the electrolyte layer is comprising polycationic materials. It has been found that an electrolyte layer based on polycations provides an acceptable degree of mobility in printed structures, so that vertical ion transport between electrolyte and first electrode layer is sufficient, while lateral migration of the polycations in the first electrode layer is acceptably low. It has also been found that printing polyelectrolytes with screen printing can be problematic due to the amphiphilic nature of many polyelectrolytes. As amphiphiles, they may stabilize foams and bubbles. Further, a high molecular weight of the polymer may enable formation of bubbles and filaments. In screen printing, wherein fluid ink meets air and passing a fine mesh, bubble formation is well accommodated. In the ink ink-split moment, when the web is lifted from the substrate, conditions for filament formation may be ideal. Filaments and bubbles may lead to poorly defined prints and pinholes.

In one embodiment the composition forming the electrolyte may have a good printability onto a first electrode layer, as well as the substrate surrounding it, so that a pinhole free layer may be obtained by printing. Further, the print deposited layer comprising the electrolyte may preferably be curable to a film stable enough to be over-printable by a composition that may form a counter electrode layer.

The most common way to reduce foam and improve leveling in inks involves adding surfactants and silicon-based compounds. There are reasons to avoid typical surfactants in an electrochemical cell. The surfactants can form thin insulating layers reducing the ionic connectivity in the cell. It is also known that addition of hydrophobic particles can limit foaming in oil-based inks as well as in water-based inks and that hydrophilic particles may stabilize foaming.

The electrolyte composition according to the present invention will upon curing form an electrolyte layer that covers the area of the underlying first electrode layer or the underlying symbol defining layer substantially without any interruptions in its structure. The printable electrolyte layer shall also provide good adhesion to the underlying layers as well as being printable, also when aqueous-based compositions are being printed onto the electrolyte layer. According to one embodiment of the present invention, said electrochromic fixed image display may further comprise a transparent plastic substrate arranged, in the viewing direction of the display, in front of said colour layer or between said colour layer and said first electrode layer.

According to one embodiment, said transparent plastic substrate is arranged in front of said colour layer in the viewing direction of the display. The advantage of having the colour layer between the plastic substrate and the first electrode layer is that the plastic substrate provides with protection against tear and wear.

According to another embodiment, said transparent plastic substrate is arranged between said colour layer and said first electrode layer in the viewing direction of the display. An advantage of this embodiment is that the display may be prefabricated according to standard methods with e.g. a white pigment in both the electrolyte layer and the masking layer. Then, a tailor-made colour layer may be provided to the prefabricated display on top of the transparent plastic substrate.

According to one embodiment, said transparent plastic substrate comprises a moisture protective layer. The plastic substrate may comprise, but is in no way limited to, polyethylene terephthalate (PET), thermoplastic polyurethane (TPU) or polycarbonate (PC). According to one embodiment, each counter electrode layer of each at least one switchable segment is connectable via an addressing electrode and/or by a separate electric conductor to an external power supply, to enable individual control of the potential applied to each counter electrode layer. This is advantageous as it enables a simultaneous switch of all switchable segments in a simple manner. According to one embodiment, said at least one switchable segment may be free of any electrodes and/or electronic conductors arranged both in front of said one or more openings in the symbol defining layer and in front of said first electrode layer as seen in the viewing direction. Furthermore, said at least one switchable segment may be free of any electrodes and/or electronic conductors arranged between the first electrode layer and the symbol defining layer. This is advantageous as it provides a simpler manufacturing process. Further, additional electrodes and/or electronic conductors may impair the electrochemical reactions and/or give rise to electrochemically parasitic reactions, leakage currents and/or unwanted migration of ions.

According to one embodiment the colour electrochromic display is a directly addressable electrochromic display, wherein each pixel is connected by a separate electric conduction line to an externally driven voltage source, thereby facilitating simultaneous individual electrical control of all pixels in the display. Furthermore, when operating a directly addressed electrochromic display, or directly addressable electrochromic display, it is possible to turn on, or initiating a switch of, all the pixels simultaneously. It should be noted that the expressions of directly addressed or directly addressable, are used interchangeably throughout the application, and both refer to an electrochromic display that is to be addressed by direct addressing.

According to an alternative embodiment the electrochromic display is a matrix display or a matrix addressable display, wherein the pixels are arranged in a matrix structure in which they are addressed by time-multiplexing techniques via row and column lines from the matrix edges. This type of structure may be used to overcome the problem of when the number of pixels in a display is large and thus it is either physically impossible or impractical to connect one separate line to each pixel.

Basically there is no limitation or restriction to the thickness of said first electrode layer of the display, but it may e.g. be between 0.1 $\mu$m and 7 $\mu$m, mainly due to manufacturing and flexibility point of views, where the chosen thickness depends on the desired device property; a thinner layer normally equals a shorter switching time of the display, while a thicker layer normally equals in higher colour contrast. Moreover, the thickness of said counter electrode layer of the display may in an embodiment be between 0.1 $\mu$m and 40 $\mu$m. When choosing the thickness of the layers the following may be kept in mind, a too thin counter electrode layer could degrade the colouring performance of said first electrode layer and a too thick layer could reduce the bending resistance and/or the mechanical pressure resistance of the display. Moreover, the thickness of said electrolyte layer of the display may in an embodiment be between 1 $\mu$m and 20 $\mu$m, or between 1 $\mu$m and 100 $\mu$m. Normally, the thinner the layer becomes, the better the flexibility, but the contrast decreases at the same time.

The thickness of each layer is measured along a viewing direction normal to the respective layer of the switchable segment.

According to an optional embodiment said counter electrode layer may comprise a first and a second counter electrode layer, wherein said second counter electrode layer comprises an electrically conducting electrochromic and electrochemically active organic polymer material, and said second counter electrode layer comprises at least one second counter electrode layer portion, wherein each one of said counter electrode layer portion(s) are spatially separated from each other and each one of said second counter electrode layer portions are in ionic contact with a respective one of said electrolyte layer portion(s), wherein the spatial extension of the respctive second counter electrode layer is smaller than the spatial extension of the corresponding opening in the symbol defining layer.

Said first counter electrode layer comprises at least one first counter electrode layer portion, wherein each one of said first counter electrode layer portions are spatially separated from each other, and each one of said first counter electrode layer portions are in electronic contact with a respective one of said second electrode layer portions and a respective one of said electrolyte layer portion(s). The first counter electrode layer may be a carbon layer.

As described above in relation to one embodiment of the display the counter electrode layer may comprise a first and a second counter electrode layer, in that case the electrolyte may be chosen more freely. Irrespective of if the counter electrode comprises a first and a second electrode layer or not, a polycationic electrolyte is normally preferred.

According to an alternative embodiment, which is not according to the claimed invention relates to an electrochromic image display, comprising at least one switchable segment which is repeatedly switchable between an on-state and an off-state, wherein each switchable segment comprises a stack of layers, said stack of layers comprising:

- a colour layer which is configured to provide a resulting colour contrast to said at least one switchable segment when comparing said on-state and off-state of the same at least one switchable segment;
- a first electrode layer comprising an electrically conducting electrochromic and electrochemically active organic polymer material which is electrochemically switchable between two different visually detectable colouring states respectively corresponding to said on-state and said off-state of said switchable segment, said first electrode layer being arranged behind said colour layer in the viewing direction of said display;
- an electrolyte layer, preferably comprising polycationic materials, being arranged behind said first electrode layer; and
- a counter electrode layer comprising an electronically conductive material being arranged behind said electrolyte layer in the viewing direction of said display, wherein said electrolyte layer is in ionic contact with the first electrode layer and the counter electrode layer.

According to another alternative embodiment, which is not according to the claimed invention relates to an electrochromic image display, comprising at least one switchable segment which is repeatedly switchable between an on-state and an off-state, wherein each of said at least one switchable segment is configured to display at least one predetermined symbol in said on-state, further each switchable segment comprises a stack of layers, said stack of layers comprising:

- a first electrode layer comprising an electrically conducting electrochromic and electrochemically active organic polymer material which is electrochemically switchable between two different visually detectable colouring states respectively corresponding to said on-state and said off-state of said switchable segment, said first electrode layer being provided on a substrate, such as a transparent plastic substrate;
- an electrolyte layer being arranged behind said first electrode layer in the viewing direction of said display; and
- a counter electrode layer comprising an electronically conductive material being arranged behind said electrolyte layer in the viewing direction of said display, wherein said electrolyte layer is in ionic contact with the first electrode layer and the counter electrode layer, wherein
- a colour layer may be arranged in front of the substrate, in the viewing direction of said display, to provide a resulting colour contrast to said at least one switchable segment when comparing said on-state and off-state of the same at least one switchable segment;

An advantage of this embodiment is that the display may be prefabricated according to standard methods with e.g. a white pigment in both the electrolyte layer and the masking layer. Subsequently, a tailor-made colour layer may be provided to the prefabricated display. The layers, such as the electrolyte layer and the masking layer, may comprise colourants and/or pigments.

When the number of pixels in a display is large, it is either physically impossible or impractical to connect one separate line to each pixel. The pixels may be arranged in a matrix structure in which they are addressed by time-multiplexing techniques via row and column lines from the matrix edges. Such displays and the methods of addressing them are denoted "matrix displays" and "matrix addressing", respectively.

The display device according to the present invention, further improves the display characteristics by improving colour contrast and sharpness of the fixed image to be displayed. In particular, the segmented design, comprising separate and isolated electrolyte segments restricts the electrochemical reaction of each segment to a specified area. Hence, undesired spreading effects, or migration, of electrochemical reaction of each active switchable segment into undesired regions, which would reduce image quality and sharpness is efficiently reduced. Additionally, the retention time of the image upon disconnecting the electric potential is prolonged by the isolated electrolyte segments.

According to one embodiment, the display comprises "layers" or "stack of layers" of different materials. These layers can be continuous or discontinuous and are preferably arranged on and carried by a plastic substrate. Further, the term "layer" normally encompasses all of the same material in the same plane, regardless whether this material is discontinuous or interrupted in such a way as to form "islands" in the plane, which "islands" are isolated from each other. As stated above, one layer can be continuous and shared by more than one switchable segment. In other words, the display may comprise a continuous layer forming e.g. the first electrode layer in a plurality of said switchable segments. In yet other words, the first electrode layers in a plurality of switchable segments may each be a separate portion of a continuous first electrode layer. The opposite may also occur, i.e. that a layer is discontinuous between different switchable segments. In other words, this layer is isolated or spatially separated between two switchable segments. Electrochromic and electrochemically active organic polymer materials for use in the electrochromic display of the present invention are for example electrochromic polythiophenes, electrochromic polypyrroles, electrochromic polyanilines, electrochromic polyisothianaphthalenes, electrochromic polyphenylene vinylenes and copolymers thereof.

In an embodiment, the electrochromic polymer material is a homopolymer or copolymer of a 3,4-dialkoxythiophene. The homopolymer or copolymer of a 3,4-dialkoxythiophene, comprising two alkoxy groups, which may be the same or different or together represent an optionally substituted oxy-alkylene-oxy bridge.

In an embodiment of the present invention, said first electrode layer comprises a homopolymer or copolymer of a 3,4-dialkoxythiophene.

In yet an embodiment, the electrochromic polymer is a homopolymer or copolymer of a 3,4-dialkoxythiophene selected from the group consisting of poly(3,4-methylenedioxythiophene), poly(3,4-methylenedioxythiophene) derivatives, poly(3,4-ethylenedioxythiophene), poly(3,4-ethylenedioxythiophene) derivatives, poly(3,4-propylenedioxythiophene), poly(3,4-propylenedioxythiophene) derivatives, poly(3,4-butylenedioxythiophene), poly(3,4-butylenedioxythiophene) derivatives, and copolymers therewith. The polyanion compound is then preferably poly(styrene sulfonate).

According to a second aspect the present invention relates to a method of producing an electrochromic fixed image display comprising at least one switchable segment which is repeatedly switchable between an on-state and an off-state, wherein each of said at least one switchable segment is configured to display at least one predetermined symbol in said on-state, said method comprises:

- providing a substrate comprising a colour layer;
- providing a continuous or discontinuous first electrode layer to said substrate comprising said colour layer, wherein said first electrode layer comprises an electrochromic and electrochemically active organic polymer material being electrochemically switchable between two different visually detectable colouring states;
- fully or partly cover said first electrode layer by a symbol defining layer, which symbol defining layer is electronically and ionically insulating and comprises at least one opening for each one of said at least one switchable segments, which at least one opening defines the shape of the at least one predetermined symbol of a respective one of said at least one switchable segment, and wherein each of said at least one opening exposes a respective surface portion of said first electrode layer;
- providing an electrolyte layer which comprises at least one electrolyte layer portion, wherein each one of said electrolyte layer portions are spatially separated from each other and each one of said electrolyte layer portions fills and covers a respective one of said opening(s) in the symbol defining layer;
- providing a counter electrode layer which comprises at least one counter electrode layer portion, wherein each one of said counter electrode layer portions are spatially separated from each other, and each one of said counter electrode layer portions are in ionic contact with said electrolyte layer portions, wherein said colour layer comprises colourants and/or opacifiers and provides a resulting colour contrast to said at least one switchable segment when comparing said on-state and off-state of the same at least one switchable segment.

By adding a colour layer in a separate step during the method for manufacturing the fixed colour display is advantageous since the configuration makes it possible to easily manufacture electrochromic displays in completely different colours than the previous standard methods for manufacturing coloured displays on one sheet. By adding a semi-transparent multicoloured colour layer in front of the display, electrochromic displays with more than one colour across the display may be achieved, e.g. an electrochromic display, wherein different portions of a symbol or letter may be perceived as having more than one colour. Thus, the method avoids the problem of having to colour match the symbol defining layer and the electrolyte layer, a process that requires the addition and mixing of pigments in both layers. A further advantage of the method according to the present invention is that the method is scalable, and it improves the "hidden message effect" before switching.

According to an embodiment of this aspect, the colour layer may be self-contained. This means that the colour layer may be stand alone or detached from a substrate and may thus be handled without it dissolving.

According to an embodiment of this aspect, each of the layers are provided by printing or coating techniques comprising of screen printing, inkjet printing, aerosol-jet printing, flexographic printing, gravure printing, offset printing, digital printing, laser printing, LED printing or bar-coating.

According to an embodiment of this aspect, said colour layer is provided to said substrate by printing or coating techniques comprising of screen printing, inkjet printing, aerosol-jet printing, flexographic printing, gravure printing, offset printing, digital printing, laser printing, LED printing or bar-coating.

The layers of the display are advantageously provided on the substrate by means of printing techniques. In order to be printable, the materials should preferably have suitable rheological properties. Inks comprising electrically conductive polymers or conducting carbon are examples of such printable materials.

According to an embodiment of this aspect, said colour layer is arranged on one side of said substrate and the continuous or discontinuous first electrode layer is provided to said substrate on the same side as said colour layer.

According to an optional embodiment of this aspect the method also comprises the step of providing a counter electrode layer comprising a first and a second counter electrode layer as described above. The second counter electrode layer portions are provided in ionic contact with a respective one of said electrolyte layer portion(s); and further said first counter electrode layer is provided in electronic contact with a respective one of said second counter electrode layer portions, as well as in ionic contact with a respective one of said electrolyte layer portions. The first counter electrode layer may be a carbon layer.

According to another aspect the present invention relates to the use of the electrochromic fixed image display in devices such as television screens, computer monitors, portable systems comprising smartphones, handheld game consoles and personal digital assistants (PDAs).

According to one embodiment all materials, or all layers, forming the fixed image displays are flexible, such that the resulting fixed image display is flexible, and/or rollable. In other words, it may be repeatedly bent or rolled without breaking. When bending or rolling the device the radius of curvature may be less than e.g. half the diameter of the display area of the display.

According to a third aspect the present invention provides a use of the electrochromic fixed image display as disclosed in the present application. The display of the present invention may be used when there is a need for a low power and low cost display, e.g. in advertisement, as a part of a disposable sensor platform, in electronic shelf labels, in medical devices requiring an electronic display, to provide information within public transportation, to provide information and indicate status in OTP (one time password) and other authentication applications.

In summary, the invention is based on a surprising insight by the inventors that by including a separate colour layer to a conventional display, such as a fixed image display, an all printable efficient and low cost display capable of displaying different colours may be obtained by an unpredictably easy and qualitative manufacturing method.

Brief Description of Drawings

Embodiments of the invention is described, by way of example, with reference to the accompanying drawings (which are not drawn to scale), wherein:

Figure 1a illustrates a schematic exploded perspective view of a part for a display according to the invention.
Figure 1b shows a schematic illustration of a finalized or assembled display.
Figure 1c illustrates schematic top views of each layer of part for a display according to the invention, arranged in the same order as they face the viewer from top to bottom.
Figure 2a, 3a and 3b illustrates photographs of a display falling outside the scope of the claims.
Figure 2b, 4a and 4b illustrates photographs of a display within the scope of the claims.

Detailed Description of Embodiments of the Invention

Presented below are more details of how different embodiments of the colour electrochromic display may be arranged and manufactured.

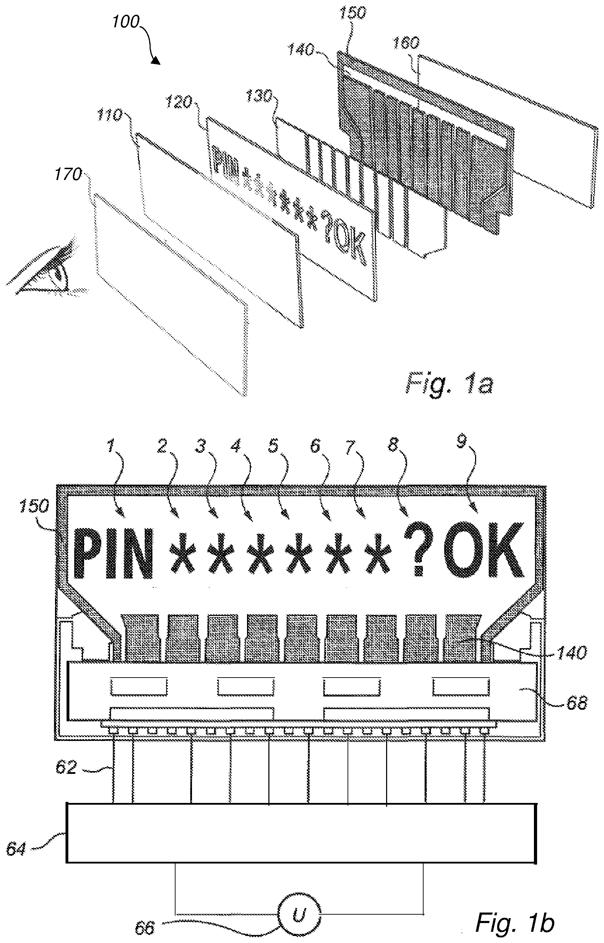

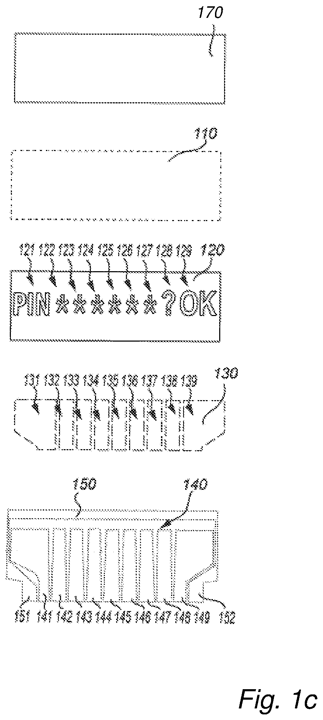

Figure 1 is a schematic drawing illustrating one example of a part for a directly addressed electrochromic fixed image display, wherein the figure illustrates the layers one by one.

In more detail, Figure 1 illustrates a directly addressed electrochromic fixed image display comprising nine switchable segments, each switchable segment being arranged for displaying a symbol, which is switchable between an on-state and an off-state. The switchable segments are numbered 1 to 9, from left to right. The symbol 'PIN' is displayed by switchable segment number 1, i.e. the leftmost switchable segment is PIN. A star-symbol, '*', is displayed by each one of switchable segments number 2-7. A question mark-symbol, '?', is displayed by switchable segment number 8, and the symbol 'OK' is displayed by switchable segment number 9. The symbol displayable by the respective switchable segment, may be turned on and off independently of the state of the other switchable segments. In operation, normally the symbol 'PIN' is displayed as the display switches on, one star is lit for each character that the user enters/button that the user presses, and upon verification of the PIN-code an OK-symbol is displayed if a match is found, and a question mark if no match is found.

Moreover, the display device is connected to an addressing circuit 64, which in turn is connected to a power supply 66. Each counter electrode 140 of the switchable segments 1-9 is connected to a respective output of the addressing circuit 64 by electronic conductors 62 by means of a holder or clip 68. The power supply 66 may power the display device, optionally via the addressing circuit 64. The power supply and the optional addressing circuit thereby provides for individual control of the potential difference over each switchable segment 1-9 by the application of different potentials to the counter electrode layer 140 and the pixel electrode layer 150. In other words, one or more power supplies may be directly electronically connected to a respective one of said counter electrodes and the outer electrode 150. According to one example the holder 68 is a 1.25 mm FPC/FFC BackFlip™ Housing, part number 49597-2017 provided by Molex®. However, there exists many different alternatives for connecting the counter electrodes to the electric conductors of a circuit board, which is well known to the person skilled in the art.

With reference to Figure 1a, the directly addressable fixed image display is described layer by layer below. First a transparent substrate is provided, and a colour layer 170 arranged thereon. A continuous or discontinuous first electrode layer 110 is further arranged on said transparent substrate comprising said colour layer 170. The electrochromic first electrode layer is preferably continuous between different switchable segments, such that the electrochromic layers in different switchable segments each is a separate portion of the continuous electrochromic layer. Alternatively, the electrochromic first electrode layer may be discontinuous between different switchable segments. In this case, each of the isolated electrochromic electrode layer is provided with a separate electrode for application of a potential.

Secondly, a symbol defining layer 120 is printed on the electrochromic first electrode layer 110, which symbol defining layer 120 comprises openings or through holes 121-129, corresponding to the shape of the symbols that are to be displayed. References 121-129 are shown in Figure 1c.

Thirdly, an electrolyte layer 130 is printed on top of the symbol defining layer 120. The electrolyte layer comprises nine portions 131-139 which are ionically isolated from each other such that the electric field in one electrolyte 131 does not influence the electric field in another electrolyte 132 in an adjacent switchable segment; one portion for each switchable segment. Each portion of electrolyte layer 131-139 is printed such that fills and covers the respective opening(s) 121-129 in the beneath symbol defining layer 120. The printed symbol defining layer may have any shape, as long as the electrolyte layer portions are ionically isolated from each other. Preferably the electrolyte layer is only in direct ionic contact with the electrochromic layer at portions where a colour switch of the electrochromic material is desired.

The symbol defining layer 120 is arranged of ion isolative/insulating material, and advantageously the adhesion between the symbol defining layer 120 and the electrochromic electrode layer 110 is verified, such that a migration and/or diffusion of electrolyte in between the symbol defining layer and the electrochromic layer is prevented or minimized. A migration of the electrolyte may deteriorate the contrast, or sharpness, of the displayed image.

Fourthly, a counter electrode layer 140 is printed on top of the electrolyte layer 130. The counter electrode layer comprises nine portions 141-149 which are electronically isolated from each other such that a potential applied to one electrode 141 do not influence the electric field in an electrolyte 132 belonging to an adjacent switchable segment. Each counter electrode portion 141-149 is printed such that it is in ionic contact with a respective one of the electrolyte layer portions 131-139. The counter electrode layer may have any shape, as long as suitable electric fields may be created in the electrolyte.

Optionally, a protective layer 160 (illustrated in Figure 1a) is provided on top of the counter electrode layer to protect and/or encapsulate the display.

**Experiments**

Manufacturing process

The Type I display is equal to the Type II display, except that the step of providing the colour layer is left out.

*Type II display*

The below examples were all manufactured by means of screen printing, using a screen printing mesh having 120 threads/cm, and a thread diameter of 34 μm, and in the below described order, unless stated otherwise. An insulating layer, comprising 125 μm thick polyethylene terephthalate (called PET hereinafter) film (Polifoil Bias manufactured by Policrom Screen), was provided and served as the substrate, a colour layer 170 was screen printed on the substrate, and then a uniform first electrode layer 110 layer of PEDOT:PSS (Clevios SV3 screen printing paste provided by Heraeus) was screen printed on the same side, i.e. on top of the colour layer.

A symbol defining layer 120 (e.g. UV curable dielectric 5018A purchased from DuPont, Uviplast UV curing ink Omniplus UL-025 from Fujifilm Sericol, Ultragraph UVAR from Marabu Printing Inks) having holes defining the symbols was then printed on top of the electrochromic layer. Additionally, a portion of the electrochromic layer was left free of the symbol defining layer. The thickness of the layer was about 10-20 $\mu$m. The symbol defining layer was cured upon exposure to UV light.

Each opening in the symbol defining layer was assigned to a respective pixel cell, and an electrolyte layer portion 131-139 was printed on top of all openings in the symbol defining layer belonging to the respective same pixel, ensuring that the openings in the symbol defining layer were filled with electrolyte, such that an electrolyte layer portion belonging to a first pixel cell was not in direct contact with an electrolyte layer portion belonging to a different pixel cell, and that no electrolyte was in ionic contact with the electrochromic layer outside the openings of the symbol defining layer. The thickness of the layer was about 5-10 $\mu$m. Thereafter the electrolyte layer was UV-cured, whereupon another electrolyte layer was printed having the same thickness. This final layer was also UV-cured. The electrolyte layer comprises Luviquat Excellence, a copolymer of vinylpyrrolidone and quaternised vinylimidazole in aqueous solution manufactured by BASF, including 10 wt.-% of $TiO_2$ powder (Kronos 2300 manufactured by KRONOS), in order to make the electrolyte white and opaque.

A counter electrode portions 141-149 (electrically conducting carbon paste 7102 purchased from DuPont ) was then screen printed on top of each of the electrolyte layer portions, ensuring that a counter electrode portion belonging to a first pixel cell was not in direct contact with a counter electrode portion belonging to a different pixel cell, and that no portion of the counter electrode layer 140 is in direct electronic contact with the electrochromic layer outside the openings of the symbol defining layer. The thickness of the layer was about 5-20 $\mu$m.

A pixel electrode 150 (electrically conducting carbon paste 7102 purchased from DuPont) was then screen printed on top of and in direct physical contact with a portion of the electrochromic layer not covered by the symbol defining layer. The portion of the electrochromic layer not covered by the symbol defining layer extends along the 'K' of the pixel cell displaying 'OK'. Further, the pixel electrode extends to the side of the leftmost and rightmost electrolyte portion 131, 139, and ends in alignment with the ends of the counter electrodes 141-149. Thereafter the counter electrode layer 140 and the pixel electrode 150 was dried at 120 °C for 3 minutes.

One conducting line was connected to each counter electrode, and one conducting line to each end of the pixel electrode. Finally, the conducting lines were connected to a voltage supply, capable of individually controlling the electric potential distributed to the pixel electrode and each counter electrode. The applied potential difference across the pixel cell was 3 V unless stated otherwise.

The symbol defining layer and the segmented electrolyte layer are discussed in more detail in WO 2013/068185. How these types of layers may be combined with a colour layer into a display according to the present invention is further described below.

<u>Colour layer displays according to the present invention</u>

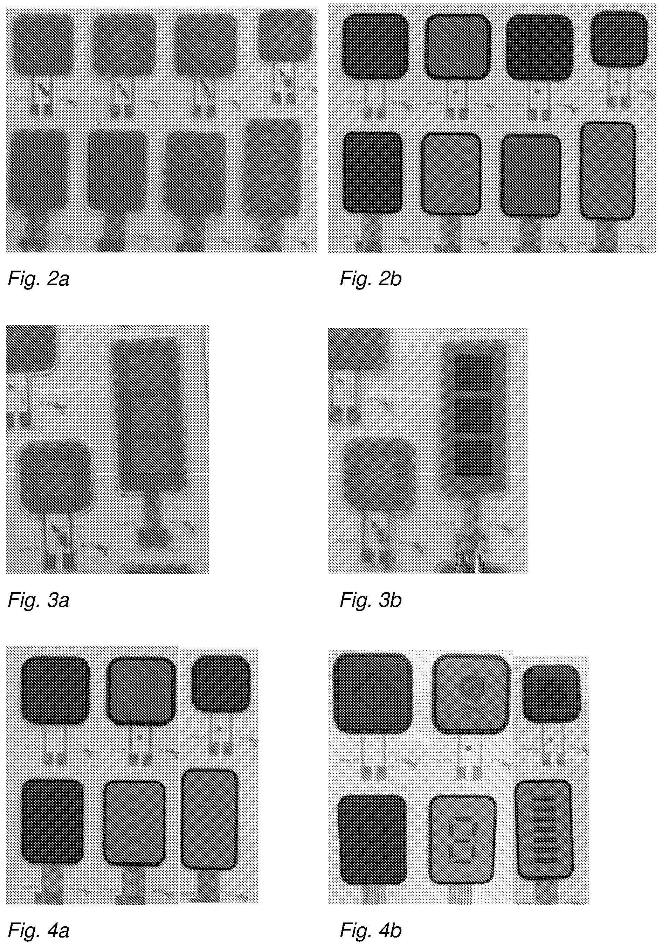

Figure 2a shows a display without a colour layer, whereas Figure 2b shows an electrochromic fixed image display according to the present invention, wherein each display is in the off-state. The displays shown in Fig 2b are manufactured as described in the section Manufacturing process above. The displays shown in Fig 2a are manufactured in the exact same way as those in Fig 2b, with the only difference that no colour layer is provided; i.e. the step of screen printing the colour layer was left out. A display manufactured as those shown in Fig. 2a is hereinafter referred to as a Type I display; while a display manufactured as those shown in Fig. 2b is hereinafter referred to as a Type II display. Figures 3a and 3b show the switching of a Type I display, where the display is in an off-state in Figure 3a and in an on-state in Figure 3b. Figures 4a and 4b show the switching of six Type II displays, where the displays are in an off-state in Figure 4a and in an on-state in Figure 4b.

<u>Colour contrast and thickness measurements</u>

The definition of the colour contrast ($\Delta E^*$) is copied from this article: P. Andersson, et al., Advanced Functional Materials, Volume17, Issue16, November 2007, p. 3074-3082.

The inventors of the present invention have chosen to measure the colour contrasts of the reflective display cells using the CIE L*a*b* colour system, where L* (lightness), a* (green-red) and b* (blue-yellow) are used to parameterize the colour space. The motivation for using the CIE L*a*b* system is that this colour evaluation toolkit adapts well to the vision of the human eye and that it is commonly used in the graphic art industry. With CIE L*a*b*, the colour contrast ($\Delta E^*$) is defined as the Euclidean distance between the colour coordinates of the different states of the pixel electrode:

$$\Delta E^* = \sqrt{\Delta L^{*2} + \Delta a^{*2} + \Delta b^{*2}}$$

The colour contrast, $\Delta E^*$, obtained for a standard version of the electrochromic display printed at RISE, i.e. without the colour layer, is typically ~30.

The colour contrast is in most cases reduced upon adding the colour layer, but the advantage is that other colours can be obtained when the colour layer is combined with the colours of the on- and off-states of the electrochromic display. The colour contrast, $\Delta E^*$, has also been measured for several electrochromic displays in which a colour layer has been included.

In all these examples, the display is observed through the plastic substrate.

Example 1

A Type II display was manufactured as described above, wherein a red colour layer was screen printed on the substrate. The thickness of the screen printed layer was ranging from 10 $\mu$m to 17 $\mu$m across the display area. These displays using a red colour layer are losing quite a lot of their initial contrast. Thus, this explains why the colour contrast was measured at different voltages. The colour contrasts obtained at 3V and 1.5V are both high, while the colour contrast obtained at 1.2 V is acceptable. The colour contrast obtained at 1.0V is definitely too low. Hence, a lower limit of the $\Delta E^*$=9 is preferred for the colour contrast in these printed electrochromic displays.

| Red | Oxidation (reference value) | Reduction 3V | Reduction 1.5V | Reduction 1.2V | Reduction 1.0V |
|---|---|---|---|---|---|
| L* | 38.98 | 33.99 | 34.49 | 36.02 | 37.40 |
| a* | 40.13 | 27.16 | 28.16 | 32.53 | 36.11 |
| b* | 20.05 | 13.00 | 13.22 | 15.71 | 17.73 |
| $\Delta E^*$ | | 15.58 | 14.49 | 9.24 | 4.89 |

Example 2

A Type II display was manufactured as described above, wherein a magenta colour layer and the display were printed on different sides of the substrate. The magenta colour layer was digital printed at a thickness of approximately 15 $\mu$m. The colour contrast when using the magenta colour layer is higher as compared to when using the red colour layer; the colour contrast when using the red colour layer is therefore determining the preferred minimum colour contrast value. Therefore, the measurements were only performed at 3V as a lower voltage would have resulted in higher $\Delta E$ as compared to the preferred minimum colour contrast value obtained for the red colour layer at the same lower voltage.

| Magenta | Oxidation (reference value) | Reduction 3V |
|---|---|---|
| L* | 41.76 | 34.81 |
| a* | 36.93 | 20.03 |
| b* | -9.82 | -14.78 |
| $\Delta E^*$ | | 18.94 |

Example 3

A Type II display was manufactured as described above, wherein a brown colour layer and the display were printed on different sides of the substrate. The brown colour layer was digital printed at a thickness of approximately 13 $\mu$m. The colour contrast when using the brown colour layer is higher as compared to when using the red colour layer; the colour contrast when using the red colour layer is therefore determining the preferred minimum colour contrast value.

| Brown | Oxidation (reference value) | Reduction 3V |
|---|---|---|
| L* | 53.41 | 41.25 |
| a* | 7.17 | -5.06 |
| b* | 31.46 | 13.39 |
| $\Delta E^*$ | | 24.98 |

Example 4

A Type II display was manufactured as described above, wherein a green colour layer and the display were printed on different sides of the substrate. The green colour layer was digital printed at a thickness of approximately 13 μm. The colour contrast when using the green colour layer is higher as compared to when using the red colour layer; the colour contrast when using the red colour layer is therefore determining the preferred minimum colour contrast value.

| Green | Oxidation (reference value) | Reduction 3V |
|---|---|---|
| L* | 64.41 | 46.86 |
| a* | -14.66 | -18.57 |
| b* | 44.72 | 19.50 |
| ΔE* | | 30.97 |

The use of a colour layer to improve the hidden message effect and/or the visual appearance is applicable not only to Type I displays but essentially to any electrochromic and electrochemically active display having an organic polymer material which is switchable between two colouring states, e.g. to matrix addressable displays and flexible fixed image displays. Exemplifying configurations of such displays may be found e.g. in WO 2008/062149, EP 2 607 950 WO 2011/042431, WO 2012/136738 and WO 2013/068185, and a self-contained and/or printed colour layer may be provided in front of the front electrode or first electrode of those displays, in the same or a similar way as has been described above.

## Claims

1. An electrochromic fixed image display (100), comprising at least one switchable segment which is repeatedly switchable between an on-state and an off-state, wherein each of said at least one switchable segment is configured to display at least one predetermined symbol in said on-state, further each switchable segment comprises a stack of layers, said stack of layers comprising:

   a colour layer (170) which is configured to provide a resulting colour contrast to said at least one switchable segment when comparing said on-state and off-state of the same at least one switchable segment;
   a first electrode layer (110) comprising an electrically conducting electrochromic and electrochemically active organic polymer material which is electrochemically switchable between two different visually detectable colouring states respectively corresponding to said on-state and said off-state of said switchable segment, said first electrode layer being arranged behind said colour layer (170) in the viewing direction of said display;
   a symbol defining layer (120) which is electronically and ionically insulating and comprises at least one opening (121), wherein said at least one opening defines the shape of said at least one predetermined symbol, said symbol defining layer being arranged behind said first electrode layer (110) in the viewing direction of said display;
   an electrolyte layer (130) being arranged behind said first symbol defining layer (120) in the viewing direction of said display, wherein said electrolyte layer (130) fills and covers the at least one opening (121) of said symbol defining layer (120); and
   a counter electrode layer (140) comprising an electronically conductive material being arranged behind said electrolyte layer (130) in the viewing direction of said display, wherein said electrolyte layer (130) is in ionic contact with the first electrode layer (110) and the counter electrode layer (140).

2. The electrochromic fixed image display (100) according to claim 1, wherein said colour layer (170) comprises colourants and/or opacifiers, preferably said colourants and/or opacifiers are selected from dyes and pigment particles.

3. The electrochromic fixed image display (100) according to claim 1 or 2, wherein said resulting colour contrast, ΔE*, is at least 9, when the colour contrast is defined as the Euclidean distance between the colour coordinates of the different states of the pixel electrode:

$$\Delta E^* = \sqrt{\Delta L^{*2} + \Delta a^{*2} + \Delta b^{*2}}$$,

wherein L* is a lightness colour space parameter, a* represents a green-red colour space parameter, and b* represents a blue-yellow colour space parameter in a CIE L*a*b* colour system.

4. The electrochromic fixed image display (100) according to any one of the preceding claims, wherein the thickness of said colour layer (170) is in the range from 5 μm to 50 μm, preferably a thickness in the range from 10 μm to 40 μm, preferably a thickness in the range from 10 μm to 20 μm, preferably a thickness in the range from 11 μm to 17 μm.

5. The electrochromic fixed image display (100) according to any one of the preceding claims, wherein said first electrode layer (110) comprises a homopolymer or copolymer of a 3,4-dialkoxythiophene.

6. The electrochromic fixed image display (100) according to any one of the preceding claims, wherein said electrolyte layer (130) is transparent or comprises colourants and/or opacifiers.

7. The electrochromic fixed image display (100) according to any one of the preceding claims, further comprising a transparent plastic substrate arranged, in the viewing direction of the display, in front of said colour layer (170) or between said colour layer (170) and said first electrode layer (110).

8. The electrochromic fixed image display (100) according to claim 7, wherein said transparent plastic substrate is arranged in front of said colour layer (170) in the viewing direction of the display.

9. The electrochromic fixed image display (100) according to claim 7, wherein said transparent plastic substrate is arranged between said colour layer (170) and said first electrode layer (110) in the viewing direction of the display.

10. The electrochromic fixed image display (100) according to claims 7 to 9, wherein said transparent plastic substrate comprises a moisture protective layer.

11. A method of manufacturing an electrochromic fixed image display comprising at least one switchable segment which is repeatedly switchable between an on-state and an off-state, wherein each of said at least one switchable segment is configured to display at least one predetermined symbol in said on-state, said method comprises:

   providing a substrate comprising a colour layer (170);
   providing a continuous or discontinuous first electrode layer (110) to said substrate comprising said colour layer (170), wherein said first electrode layer (110) comprises an electrochromic and electrochemically active organic polymer material being electrochemically switchable between two different visually detectable colouring states;
   fully or partly cover said first electrode layer (110) by a symbol defining layer (120), which symbol defining layer (120) is electronically and ionically insulating and comprises at least one opening (121) for each one of said at least one switchable segments, which at least one opening (121) defines the shape of the at least one predetermined symbol of a respective one of said at least one switchable segment, and wherein each of said at least one opening (121) exposes a respective surface portion of said first electrode layer (110);
   providing an electrolyte layer (130) which comprises at least one electrolyte layer portion (131), wherein each one of said electrolyte layer portions (131) are spatially separated from each other and each one of said electrolyte layer portions (131) fills and covers a respective one of said opening(s) (121) in the symbol defining layer (120);
   providing a counter electrode layer (140) which comprises at least one counter electrode layer portion (141), wherein each one of said counter electrode layer portions (141) are spatially separated from each other, and each one of said counter electrode layer portions (141) are in ionic contact with said electrolyte layer portions (131), wherein said colour layer (170) comprises colourants and/or opacifiers and provides a resulting colour contrast to said at least one switchable segment when comparing said on-state and off-state of the same at least one switchable segment.

12. The method according to claim 11, wherein each of the layers are provided by printing or coating techniques comprising of screen printing, inkjet printing, aerosol-jet printing, flexographic printing, gravure printing, offset printing, digital printing, laser printing, LED printing or bar-coating.

13. The method according to claim 11 or 12, wherein said colour layer is provided to said substrate by printing or coating techniques comprising of screen printing, inkjet printing, aerosol-jet printing, flexographic printing, gravure printing, offset printing, digital printing, laser printing, LED printing or bar-coating.

14. The method according to any of claims 11 to 13, wherein said colour layer is arranged on one side of said substrate and the continuous or discontinuous first electrode layer (110) is provided to said substrate on the same side as said colour layer (170).

15. Use of an electrochromic fixed image display according to claims 1 to 10 in devices such as television screens, computer monitors, portable systems comprising smartphones, handheld game consoles and personal digital assistants, PDAs.

**Patentansprüche**

1. Elektrochrome Festbildanzeige (100), die mindestens ein schaltbares Segment umfasst, das wiederholt zwischen einem Ein-Zustand und einem Aus-Zustand umschaltbar ist, wobei jedes von dem mindestens einen schaltbaren Segment konfiguriert ist, um im Ein-Zustand mindestens ein vorbestimmtes Symbol anzuzeigen, und wobei jedes schaltbare Segment weiter einen Stapel von Schichten umfasst, wobei der Stapel von Schichten umfasst:

   eine Farbschicht (170), die konfiguriert ist, um dem mindestens einen schaltbaren Segment einen resultierenden Farbkontrast bereitzustellen, wenn der Ein-Zustand und Aus-Zustand desselben mindestens einen schaltbaren Segments verglichen werden;
   eine erste Elektrodenschicht (110), die ein elektrisch leitfähiges elektrochromes und elektrochemisch aktives organisches Polymermaterial umfasst, das elektrochemisch zwischen zwei verschiedenen visuell erkennbaren Farbzuständen umschaltbar ist, die dem Ein-Zustand beziehungsweise dem Aus-Zustand des schaltbaren Segments entsprechen, wobei die erste Elektrodenschicht in Betrachtungsrichtung der Anzeige hinter der Farbschicht (170) angeordnet ist;
   eine Symboldefinitionsschicht (120), die elektronisch und ionisch isolierend ist und mindestens eine Öffnung (121) umfasst, wobei die mindestens eine Öffnung die Gestalt des mindestens einen vorbestimmten Symbols definiert, wobei die Symboldefinitionsschicht in der Betrachtungsrichtung der Anzeige hinter der ersten Elektrodenschicht (110) angeordnet ist;
   eine Elektrolytschicht (130), die in der Betrachtungsrichtung der Anzeige hinter der ersten Symboldefinitionsschicht (120) angeordnet ist, wobei die Elektrolytschicht (130) die mindestens eine Öffnung (121) der Symboldefinitionsschicht (120) ausfüllt und abdeckt; und
   eine Gegenelektrodenschicht (140), die ein elektronisch leitfähiges Material umfasst, die in der Betrachtungsrichtung der Anzeige hinter der Elektrolytschicht (130) angeordnet ist, wobei die Elektrolytschicht (130) in ionischem Kontakt mit der ersten Elektrodenschicht (110) und der Gegenelektrodenschicht (140) steht.

2. Elektrochrome Festbildanzeige (100) nach Anspruch 1, wobei die Farbschicht (170) Farbstoffe und/oder Trübungsmittel umfasst, wobei die Farbstoffe und/oder Trübungsmittel vorzugsweise aus Färbemitteln und Pigmentpartikeln ausgewählt werden.

3. Elektrochrome Festbildanzeige (100) nach Anspruch 1 oder 2, wobei der resultierende Farbkontrast $\Delta E^*$ mindestens 9 ist, wenn der Farbkontrast als der euklidische Abstand zwischen den Farbkoordinaten der verschiedenen Zustände der Pixelelektrode definiert ist:

$$\Delta E^* = \sqrt{\Delta L^{*2} + \Delta a^{*2} + \Delta b^{*2}},$$

wobei L* ein Helligkeitsfarbraumparameter ist, a* einen Grün-Rot-Farbraumparameter darstellt und b* einen Blau-Gelb-Farbraumparameter in einem CIE L*a*b* Farbsystem darstellt.

4. Elektrochrome Festbildanzeige (100) nach einem der vorstehenden Ansprüche, wobei die Dicke der Farbschicht (170) im Bereich von 5 $\mu$m bis 50 $\mu$m liegt, vorzugsweise eine Dicke im Bereich von 10 $\mu$m bis 40 $\mu$m, vorzugsweise eine Dicke im Bereich von 10 $\mu$m bis 20 $\mu$m, vorzugsweise eine Dicke im Bereich von 11 $\mu$m bis 17 $\mu$m ist.

5. Elektrochrome Festbildanzeige (100) nach einem der vorstehenden Ansprüche, wobei die erste Elektrodenschicht (110) ein Homopolymer oder Copolymer eines 3,4-Dialkoxythiophens umfasst.

6. Elektrochrome Festbildanzeige (100) nach einem der vorstehenden Ansprüche, wobei die Elektrolytschicht (130) transparent ist oder Farbstoffe und/oder Trübungsmittel umfasst.

7. Elektrochrome Festbildanzeige (100) nach einem der vorstehenden Ansprüche, die weiter ein transparentes Kunststoffsubstrat umfasst, das in der Betrachtungsrichtung der Anzeige vor der Farbschicht (170) oder zwischen der Farbschicht (170) und der ersten Elektrodenschicht (110) angeordnet ist.

8. Elektrochrome Festbildanzeige (100) nach Anspruch 7, wobei das transparente Kunststoffsubstrat in der Betrachtungsrichtung der Anzeige vor der Farbschicht (170) angeordnet ist.

9. Elektrochrome Festbildanzeige (100) nach Anspruch 7, wobei das transparente Kunststoffsubstrat in der Betrachtungsrichtung der Anzeige zwischen der Farbschicht (170) und der ersten Elektrodenschicht (110) angeordnet ist.

10. Elektrochrome Festbildanzeige (100) nach den Ansprüchen 7 bis 9, wobei das transparente Kunststoffsubstrat eine Feuchtigkeitsschutzschicht umfasst.

11. Verfahren zur Herstellung einer elektrochromen Festbildanzeige, die mindestens ein schaltbares Segment umfasst, das wiederholt zwischen einem Ein-Zustand und einem Aus-Zustand umschaltbar ist, wobei jedes von dem mindestens einen schaltbaren Segment konfiguriert ist, um im Ein-Zustand mindestens ein vorbestimmtes Symbol anzuzeigen, wobei das Verfahren umfasst:

Bereitstellen eines Substrats, das eine Farbschicht (170) umfasst;

Bereitstellen einer kontinuierlichen oder diskontinuierlichen ersten Elektrodenschicht (110) auf dem Substrat, das die Farbschicht (170) umfasst, wobei die erste Elektrodenschicht (110) ein elektrochromes und elektrochemisch aktives organisches Polymermaterial umfasst, das elektrochemisch zwischen zwei verschiedenen visuell erkennbaren Farbzuständen umschaltbar ist;

vollständig oder teilweise Abdecken der ersten Elektrodenschicht (110) mit einer Symboldefinitionsschicht (120), welche Symboldefinitionsschicht (120) elektronisch und ionisch isolierend ist und für jedes der mindestens einen schaltbaren Segmente mindestens eine Öffnung (121) umfasst, welche mindestens eine Öffnung (121) die Gestalt des mindestens einen vorbestimmten Symbols eines jeweiligen von dem mindestens einen schaltbaren Segment definiert, und wobei jede der mindestens einen Öffnung (121) einen jeweiligen Oberflächenabschnitt der ersten Elektrodenschicht (110) freigibt; Bereitstellen einer Elektrolytschicht (130), die mindestens einen Elektrolytschichtabschnitt (131) umfasst, wobei die Elektrolytschichtabschnitte (131) jeweils räumlich voneinander getrennt sind und jeder der Elektrolytschichtabschnitte (131) eine jeweilige der Öffnung(en) (121) in der Symboldefinitionsschicht (120) ausfüllt und abdeckt;

Bereitstellen einer Gegenelektrodenschicht (140), die mindestens einen Gegenelektrodenschichtabschnitt (141) umfasst, wobei die Gegenelektrodenschichtabschnitte (141) jeweils räumlich voneinander getrennt sind und jeder der Gegenelektrodenschichtabschnitte (141) in ionischem Kontakt mit den Elektrolytschichtabschnitten (131) steht, wobei die Farbschicht (170) Farbstoffe und/oder Trübungsmittel umfasst und dem mindestens einen schaltbaren Segment einen resultierenden Farbkontrast bereitstellt, wenn der Ein-Zustand und der Aus-Zustand desselben mindestens einen schaltbaren Segments verglichen werden.

12. Verfahren nach Anspruch 11, wobei jede der Schichten durch Druck- oder Beschichtungstechniken bereitgestellt wird, die Siebdruck, Tintenstrahldruck, Aerosolstrahldruck, Flexodruck, Tiefdruck, Offsetdruck, Digitaldruck, Laserdruck, LED-Druck oder Stabbeschichtung umfassen.

13. Verfahren nach Anspruch 11 oder 12, wobei die Farbschicht dem Substrat durch Druck- oder Beschichtungsverfahren bereitgestellt wird, die Siebdruck, Tintenstrahldruck, Aerosolstrahldruck, Flexodruck, Tiefdruck, Offsetdruck, Digitaldruck, Laserdruck, LED-Druck oder Rakelbeschichtung umfassen.

14. Verfahren nach einem der Ansprüche 11 bis 13, wobei die Farbschicht auf einer Seite des Substrats angeordnet ist und die kontinuierliche oder diskontinuierliche erste Elektrodenschicht (110) dem Substrat auf derselben Seite wie die Farbschicht (170) bereitgestellt wird.

15. Verwendung einer elektrochromen Festbildanzeige nach den Ansprüchen 1 bis 10 in Vorrichtungen wie Fernsehbildschirmen, Computermonitoren, tragbaren Systemen, die Smartphones, Handheld-Spielkonsolen und Personal Digital Assistants, PDAs umfassen.

**Revendications**

1. Afficheur d'image fixe électrochrome (100), comprenant au moins un segment commutable qui est commutable de manière répétée entre un état activé et un état désactivé, dans lequel chacun dudit au moins un segment commutable est configuré pour afficher au moins un symbole prédéterminé dans ledit état activé, en outre, chaque segment commutable comprend un empilement de couches, ledit empilement de couches comprenant :

   une couche de couleur (170) qui est configurée pour fournir un contraste de couleur résultant audit au moins un segment commutable lors de la comparaison dudit état activé et dudit état désactivé du même au moins un segment commutable ;
   une première couche d'électrode (110) comprenant un matériau polymère organique électrochrome, électroconducteur et électrochimiquement actif qui est commutable électrochimiquement entre deux états de coloration différents détectables visuellement correspondant respectivement audit état activé et audit état désactivé dudit segment commutable, ladite première couche d'électrode étant agencée derrière ladite couche de couleur (170) dans la direction de visualisation dudit afficheur ;
   une couche de définition de symbole (120) qui est isolante électroniquement et ioniquement et comprend au moins une ouverture (121), dans lequel ladite au moins une ouverture définit la forme dudit au moins un symbole prédéterminé, ladite couche de définition de symbole étant agencée derrière ladite première couche d'électrode (110) dans la direction de visualisation dudit afficheur ;
   une couche d'électrolyte (130) agencée derrière ladite première couche de définition de symbole (120) dans la direction de visualisation dudit afficheur, dans lequel ladite couche d'électrolyte (130) remplit et recouvre la au moins une ouverture (121) de ladite couche de définition de symbole (120) ; et
   une couche de contre-électrode (140) comprenant un matériau électroniquement conducteur, agencée derrière ladite couche d'électrolyte (130) dans la direction de visualisation dudit afficheur, dans lequel ladite couche d'électrolyte (130) est en contact ionique avec la première couche d'électrode (110) et la couche de contre-électrode (140).

2. Afficheur d'image fixe électrochrome (100) selon la revendication 1, dans lequel ladite couche de couleur (170) comprend des colorants et/ou des opacifiants, de préférence lesdits colorants et/ou opacifiants sont sélectionnés parmi des teintures et des particules de pigments.

3. Afficheur d'image fixe électrochrome (100) selon la revendication 1 ou 2, dans lequel ledit contraste de couleur résultant, $\Delta E^*$, est au moins de 9, lorsque le contraste de couleur est défini comme la distance euclidienne entre les coordonnées de couleur des différents états de l'électrode de pixel :

$$\Delta E^* = \sqrt{\Delta L^{*2} + \Delta a^{*2} + \Delta b^{*2}},$$

   dans lequel L* est un paramètre d'espace de couleur de luminosité, a* représente un paramètre d'espace de couleur vert-rouge, et b* représente un paramètre d'espace de couleur bleu-jaune dans un système de couleurs CIE L*a*b*.

4. Afficheur d'image fixe électrochrome (100) selon l'une quelconque des revendications précédentes, dans lequel l'épaisseur de ladite couche de couleur (170) est dans la plage de 5 μm à 50 μm, de préférence une épaisseur dans la plage de 10 μm à 40 μm, de préférence une épaisseur dans la plage de 10 μm à 20 μm, de préférence une épaisseur dans la plage de 11 μm à 17 μm.

5. Afficheur d'image fixe électrochrome (100) selon l'une quelconque des revendications précédentes, dans lequel ladite première couche d'électrode (110) comprend un homopolymère ou copolymère d'un 3,4-dialcoxythiophène.

6. Afficheur d'image fixe électrochrome (100) selon l'une quelconque des revendications précédentes, dans lequel ladite couche d'électrolyte (130) est transparente ou comprend des colorants et/ou opacifiants.

7. Afficheur d'image fixe électrochrome (100) selon l'une quelconque des revendications précédentes, comprenant en outre un substrat en plastique transparent agencé, dans la direction de visualisation de l'afficheur, devant ladite couche de couleur (170) ou entre ladite couche de couleur (170) et ladite première couche d'électrode (110).

8. Afficheur d'image fixe électrochrome (100) selon la revendication 7, dans lequel ledit substrat en plastique transparent est agencé devant ladite couche de couleur (170) dans la direction de visualisation de l'afficheur.

9. Afficheur d'image fixe électrochrome (100) selon la revendication 7, dans lequel ledit substrat en plastique transparent est agencé entre ladite couche de couleur (170) et ladite première couche d'électrode (110) dans la direction de visualisation de l'afficheur.

10. Afficheur d'image fixe électrochrome (100) selon les revendications 7 à 9, dans lequel ledit substrat en plastique transparent comprend une couche de protection contre l'humidité.

11. Procédé de fabrication d'un afficheur d'image fixe électrochrome comprenant au moins un segment commutable qui est commutable de manière répétée entre un état activé et un état désactivé, dans lequel chacun dudit au moins un segment commutable est configuré pour afficher au moins un symbole prédéterminé dans ledit état activé, ledit procédé comprend :

   la fourniture d'un substrat comprenant une couche de couleur (170) ;
   la fourniture d'une première couche d'électrode continue ou discontinue (110) audit substrat comprenant ladite couche de couleur (170), dans lequel ladite première couche d'électrode (110) comprend un matériau polymère organique électrochrome et électrochimiquement actif étant commutable électrochimiquement entre deux états de coloration différents détectables visuellement ;
   le recouvrement total ou partiel de ladite première couche d'électrode (110) par une couche de définition de symbole (120), laquelle couche de définition de symbole (120) est isolante électroniquement et ioniquement et comprend au moins une ouverture (121) pour chacun desdits au moins un segments commutables, laquelle au moins une ouverture (121) définit la forme du au moins un symbole prédéterminé d'un segment respectif dudit au moins un segment commutable, et dans lequel chacune de ladite au moins une ouverture (121) expose une partie de surface respective de ladite première couche d'électrode (110) ; la fourniture d'une couche d'électrolyte (130) qui comprend au moins une partie de couche d'électrolyte (131), dans lequel chacune desdites parties de couche d'électrolyte (131) est séparée spatialement l'une de l'autre et chacune desdites parties de couche d'électrolyte (131) remplit et recouvre l'une respective desdites ouvertures (121) dans la couche de définition de symbole (120) ;
   la fourniture d'une couche de contre-électrode (140) qui comprend au moins une partie de couche de contre-électrode (141), dans lequel chacune desdites parties de couche de contre-électrode (141) est séparée spatialement l'une de l'autre, et chacune desdites parties de couche de contre-électrode (141) est en contact ionique avec lesdites parties de couche d'électrolyte (131), dans lequel ladite couche de couleur (170) comprend des colorants et/ou opacifiants et fournit un contraste de couleur résultant audit au moins un segment commutable lors de la comparaison dudit état activé et dudit état désactivé du même au moins un segment commutable.

12. Procédé selon la revendication 11, dans lequel chacune des couches est fournie par des techniques d'impression ou de revêtement comprenant la sérigraphie, l'impression par jet d'encre, l'impression par jet d'aérosol, l'impression flexographique, l'impression par gravure, l'impression offset, l'impression numérique, l'impression laser, l'impression LED ou le revêtement par étalement.

13. Procédé selon la revendication 11 ou 12, dans lequel ladite couche de couleur est fournie audit substrat par des techniques d'impression ou de revêtement comprenant la sérigraphie, l'impression par jet d'encre, l'impression par jet d'aérosol, l'impression flexographique, l'impression par gravure, l'impression offset, l'impression numérique, l'impression laser, l'impression LED ou le revêtement par étalement.

14. Procédé selon l'une quelconque des revendications 11 à 13, dans lequel ladite couche de couleur est agencée sur un côté dudit substrat et la première couche d'électrode continue ou discontinue (110) est disposée sur ledit substrat sur le même côté que ladite couche de couleur (170).

15. Utilisation d'un afficheur d'image fixe électrochrome selon les revendications 1 à 10 dans des dispositifs tels que des écrans de télévision, des moniteurs d'ordinateur, des systèmes portables comprenant des smartphones, des consoles de jeux portables et des assistants numériques personnels, PDA.

Fig. 1a

Fig. 1b

*170*

*110*

*121 122 123 124 125 126 127 128 129 120*

PIN ✱✱✱✱✱✱?OK

*131 132 133 134 135 136 137 138 139 130*

*150 140*

*151 141 142 143 144 145 146 147 148 149 152*

*Fig. 1c*

Fig. 2a

Fig. 2b

Fig. 3a

Fig. 3b

Fig. 4a

Fig. 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013068185 A
- WO 2008062149 A
- EP 2607950 A
- WO 2011042431 A
- WO 2012136738 A

**Non-patent literature cited in the description**

- **P. ANDERSSON et al.** *Advanced Functional Materials*, November 2007, vol. 17 (16), 3074-3082